# DEMANDE DE BREVET EUROPEEN

(11) **EP 4 822 450 A1**
(43) Date de publication de la demande: **14.10.2026**
(21) Numéro de dépôt: 26201097.8
(22) Date de dépôt: 24.11.2023
(51) Int. Cl.: G04B 7/00

(54) **MÉCANISME DE TRANSMISSION POUR DISPOSITIF DE REMONTAGE AUTOMATIQUE**

(30) Priorité: 25.11.2022 EP 22209734
(62) Numéro(s) de document de la (des) demande(s) initiale(s) en application de l'article 76 CBE: 23211913.1 / 4 375 758
(71) Demandeur: ROLEX SA, 1211 Genève 26 (CH)
(72) Inventeur: VILLARET, Pierre, 74350 Villy Le Pelloux (FR)
(74) Mandataire: Moinas & Savoye SARL

(57) **Abrégé**

Mécanisme de transmission (110) pour dispositif de remontage automatique pour pièce d'horlogerie (400) comprenant un montage en série :
- d'une première roue libre (40) fonctionnant par coincement,
- d'un redresseur (50) comprenant au moins un accouplement unidirectionnel fonctionnant par obstacle ou au moins une deuxième roue libre (51a, 51b) fonctionnant par obstacle, et
- d'une masse mobile de remontage (60),

un premier rapport de réduction entre :
- une sortie du redresseur (50), et
- une entrée de la première roue libre (40),

étant inférieur à 8, voire inférieur à 6, voire encore inférieur à 5.

## Description

L'invention concerne un mécanisme de transmission pour dispositif de remontage automatique. L'invention concerne aussi une chaîne de remontage automatique comprenant un tel mécanisme de transmission. L'invention concerne aussi un mouvement horloger comprenant un tel mécanisme de transmission ou une telle chaîne de remontage automatique. L'invention concerne enfin une pièce d'horlogerie comprenant un tel mécanisme de transmission ou une telle chaîne de remontage automatique ou un tel mouvement horloger.

Les systèmes d'inversion dotés de roues libres à cliquets sont aujourd'hui largement utilisés dans l'horlogerie pour le remontage automatique d'un ressort de barillet. Les roues libres à cliquets présentent une solution fiable et robuste permettant de bénéficier :
- d'un remontage automatique performant grâce notamment à un faible angle mort,
- d'une faible sensibilité aux pollutions, et
- de peu de frottement intrinsèque.

Afin que l'angle mort du système d'inversion rapporté à la masse oscillante soit le plus faible possible, il est préféré d'agencer le système d'inversion au plus proche de cette dernière. Cependant, du fait du rapport de transmission élevé de la chaîne cinématique de remontage automatique, un tel agencement engendre des sollicitations mécaniques extrêmes des roues libres du système d'inversion lors d'un remontage manuel. En effet, plus le système d'inversion est proche de la masse oscillante, plus le rapport de transmission depuis la tige de remontoir est élevé et, par conséquent, plus les roues libres prenant part au système d'inversion tournent vite lors d'un remontage manuel. Ainsi avec un tel agencement, la vitesse de rotation des roues libres du système d'inversion peut engendrer une oscillation des cliquets supérieure à 3'000 Hz, voire supérieure à 5'000 Hz. Ces sollicitations extrêmes sont susceptibles de dégrader les roues libres à cliquets par une usure prématurée des cliquets et/ou de la denture complémentaire. De plus, lors d'un remontage manuel, l'oscillation des cliquets des roues libres disposées au plus proche de la masse oscillante engendre un couple conséquent rapporté à la tige de remontoir. De ce fait, le couple que doivent supporter les chaînes cinématiques est aussi plus élevé, ce qui peut aussi provoquer un vieillissement prématuré des différents rouages.

D'un point de vue sensoriel, ces sollicitations peuvent encore engendrer une sensation de grattement à la tige de remontoir et un bruit désagréable pour l'utilisateur de la montre.

On connaît des solutions de roue libre permettant un débrayage de la chaîne cinématique de remontage automatique lors d'un remontage manuel qui pallie l'usure prématurée du système d'inversion. Étant donné que le débrayage est effectué seulement lors d'un remontage manuel, c'est-à-dire sous l'effet d'un couple fourni par l'utilisateur, ladite roue libre connue de l'état de la technique est de conception plus simple et moins performante que celles qui composent un système d'inversion. Ladite roue libre peut présenter une conformation rudimentaire avec une ou plusieurs lames ressorts ou cliquets susceptibles de coopérer par obstacle avec une roue dentée et susceptibles de générer un couple de débrayage conséquent. Elle est généralement disposée au plus proche du rochet de barillet, de sorte à éviter une vitesse de rotation trop élevée lors du remontage manuel et ainsi lui éviter une usure prématurée.

De par sa conception relativement simple, la roue libre connue de l'état de la technique peut engendrer les inconvénients suivants :
- Des variations de couple à la tige de remontoir ressenties par l'utilisateur lors d'un remontage manuel.
- Une sensation et/ou un bruit de grattement provoqués par l'oscillation des lames ou des cliquets.
- Une efficacité amoindrie du remontage automatique consécutif à un remontage manuel.

Dans l'ouvrage Théorie d'horlogerie (Reymondin et al., éditions de la Fédération des Écoles Techniques, 1998), le débrayage d'une chaîne cinématique de remontage automatique lors d'un remontage manuel est décrit. Une roue libre est agencée au sein d'un mobile entraîneur de rochet. Cette roue libre comprend, par exemple, un ressort à bras, solidaire d'un pignon, destiné à coopérer avec une roue entraîneuse de rochet, montée folle autour du pignon. Le couple nécessaire au débrayage de ce type de roue libre peut être relativement important. Ce couple de débrayage important peut être problématique s'il est supérieur au couple de débrayage du système d'inversion, car la roue libre ne sera tout simplement pas fonctionnelle ou que partiellement. En effet, elle pourrait ne débrayer qu'en cas de grattement ou de coincement important du système d'inversion, et engendrerait alors inévitablement des variations de bruits et de sensations à la tige de remontoir potentiellement gênantes pour l'utilisateur. Le fait de disposer cette roue libre à proximité du rochet implique aussi que le couple qu'elle doit supporter lors du remontage automatique est élevé.

Le débrayage d'une chaîne cinématique de remontage automatique par un cliquet élastique est également décrit dans le document CH277730A. Comme dans la précédente solution, cette roue libre est agencée au sein d'un entraîneur de rochet en prise avec un rochet.

Le document EP2392975A2 divulgue une construction particulière d'une roue libre à cliquets élastiques destinés à coopérer avec une denture interne. L'agencement de la roue libre au sein de la chaîne cinématique de remontage automatique reste similaire aux précédentes solutions exposées.

Le document EP2634650A2 divulgue une solution de roue libre à cliquets agencée au sein d'un mobile d'un système d'inversion de type Pellaton. Celle-ci permet de débrayer le système d'inversion lors d'un remontage manuel avec une roue libre fonctionnant par obstacle.

Le but de l'invention est de fournir un mécanisme de transmission remédiant aux problèmes évoqués précédemment et permettant d'améliorer les mécanismes de transmission connus de l'art antérieur. En particulier, l'invention propose un mécanisme de transmission permettant d'optimiser les performances et les sensations de l'utilisateur lors d'un remontage manuel.

Un mécanisme de transmission selon l'invention est défini par la revendication 1.

Différents modes de réalisation d'un mécanisme de transmission selon l'invention sont définis par les revendications 2 à 6.

Une chaîne de remontage automatique ou un module de remontage automatique selon l'invention est défini par la revendication 7.

Différents modes de réalisation d'une chaîne de remontage automatique ou d'un module de remontage automatique selon l'invention sont définis par les revendications 8 et 9.

Un mouvement horloger selon l'invention est défini par la revendication 10.

Différents modes de réalisation d'un mouvement horloger selon l'invention sont définis par les revendications 11 à 12.

Une pièce d'horlogerie selon l'invention est définie par la revendication 13.

Les dessins annexés représentent, à titre d'exemple, un mode de réalisation d'une pièce d'horlogerie selon l'invention.
La figure 1 est une vue schématique d'un mode de réalisation d'une pièce d'horlogerie selon l'invention.
La figure 2 est une vue en perspective d'une partie d'un mode de réalisation d'un mécanisme de transmission.
La figure 3 est une vue de dessus d'une partie du mode de réalisation du mécanisme de transmission.
La figure 4 est une vue schématique d'un mode de réalisation d'une pièce d'horlogerie selon l'invention.

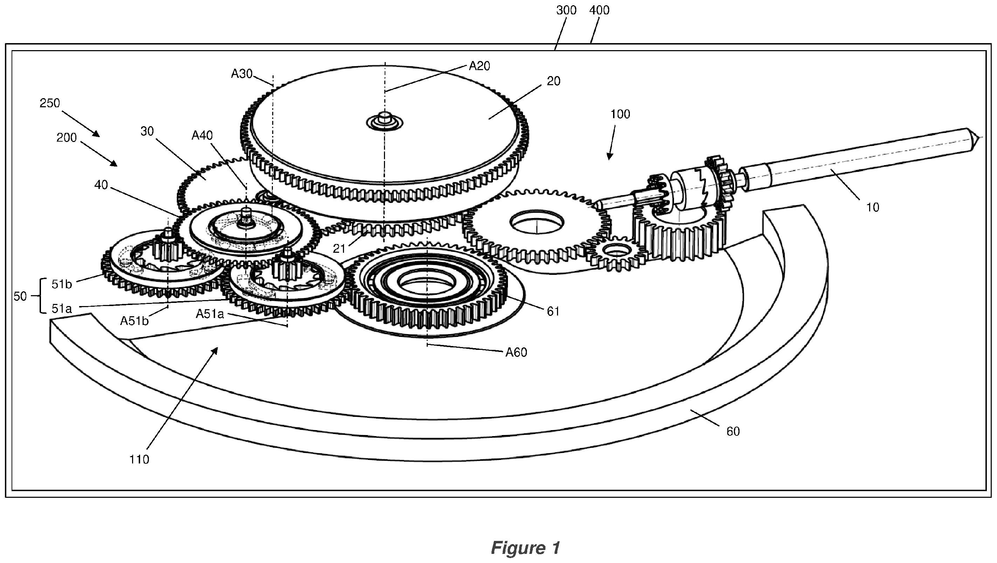

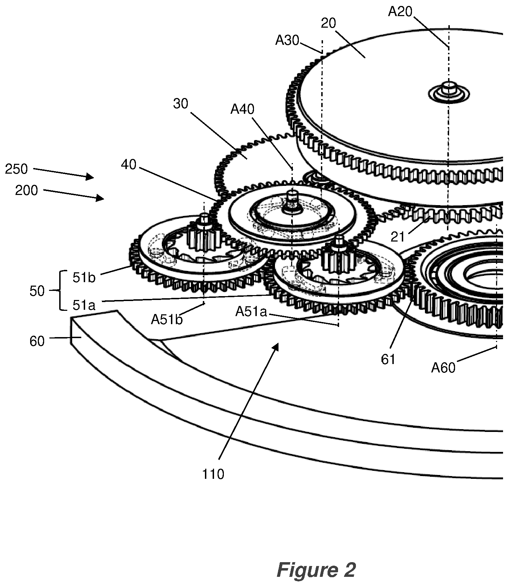

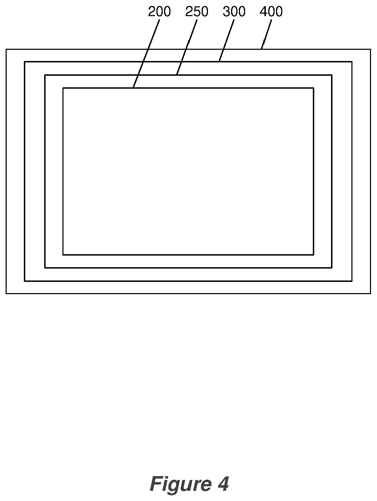

Un premier mode de réalisation d'une pièce d'horlogerie 400 est décrit ci-après en détail en référence aux figures 1 à 4.

La pièce d'horlogerie 400 est par exemple une montre, en particulier une montre bracelet. La pièce d'horlogerie 400 comprend un mouvement horloger 300 destiné à être monté dans un boîtier ou une boîte de pièce d'horlogerie afin de le protéger de l'environnement extérieur.

Le mouvement horloger 300 est un mouvement automatique, ou encore un mouvement hybride.

Le mouvement horloger 300 comprend une chaîne de remontage automatique 200. Cette chaîne de remontage automatique peut être comprise dans un module de remontage automatique 250 rapporté sur le reste du mouvement horloger, notamment un module de remontage automatique 250 :
- fixé sur une platine ou au moins un pont d'un bâti du mouvement horloger 300, et
- lié mécaniquement à un barillet 20 du mouvement horloger 300.

La chaîne de remontage automatique 200 comprend un mécanisme de transmission 110.

Le mécanisme de transmission 110 comprend un montage en série :
- d'une première roue libre 40 fonctionnant par coincement,
- d'un redresseur 50 comprenant au moins un accouplement unidirectionnel fonctionnant par obstacle ou au moins une deuxième roue libre 51a, 51b fonctionnant par obstacle, et
- d'une masse mobile de remontage 60 ou masse oscillante 60.

Par « roue libre fonctionnant par coincement », nous entendons une roue libre dont la fonction d'embrayage est assurée par le coincement ou l'arc-boutement dû au frottement d'éléments roulants comme des billes ou des galets ou des rouleaux, ou d'éléments glissants comme des cames ou des galets de forme.

Par « accouplement unidirectionnel fonctionnant par obstacle », nous entendons un redresseur tel que notamment décrit aux pages 178 à 179 dans le livre « Théorie d'horlogerie » (Reymondin et al., éditions de la Fédération des Écoles Techniques, 1998), c'est-à-dire :
- un mécanisme à cames ou levier-cliquets fonctionnant par obstacle, ou
- un mécanisme avec roues dentées alternativement en prise fonctionnant par obstacle, ou
- un mécanisme à mobiles d'embrayage fonctionnant par obstacle.

Par « roue libre fonctionnant par obstacle », nous entendons une roue libre dont la fonction d'embrayage est assurée par des éléments se faisant obstacle l'un à l'autre (et fonctionnant donc même en l'absence de frottement entre ces éléments).

Par « roue libre », nous entendons un ensemble comprenant :
- une entrée montée mobile en rotation relativement au bâti,
- une sortie montée mobile en rotation relativement au bâti, et
- un mécanisme de liaison permettant de lier ou solidariser ou fixer l'entrée et la sortie lors d'une sollicitation d'un mouvement relatif entre l'entrée et la sortie dans un premier sens et de laisser un libre mouvement relatif entre l'entrée et la sortie dans un deuxième sens, opposé au premier sens.

Le redresseur 50 est un redresseur de sens ou un système d'inversion 50, il permet de réaliser une conversion :
- du mouvement de la masse mobile de remontage 60 qui peut notamment comprendre, au porter de la pièce d'horlogerie, des mouvements aléatoires de rotation, en
- un mouvement unidirectionnel de rotation.

Pour ce faire, la masse mobile de remontage est liée mécaniquement à une entrée du redresseur et on obtient à une sortie du redresseur le mouvement unidirectionnel de rotation.

La première roue libre 40 permet le débrayage du redresseur 50 lors d'un remontage manuel, c'est-à-dire lorsqu'un utilisateur arme ou remonte le barillet 20 en exerçant une action sur un organe de remontage manuel, par exemple en en appliquant un mouvement de rotation à une tige 10 via une couronne. Ce débrayage permet un désaccouplement ou une désolidarisation du redresseur et de la partie de chaîne se trouvant en aval de la première roue libre.

La chaîne de remontage automatique ou chaîne cinématique de remontage automatique 200 permet l'armage ou le remontage automatique d'un barillet 20 grâce à une transmission d'énergie des mouvements de la masse mobile de remontage 60.

Il est également prévu que le barillet 20 puisse être remonté manuellement par une tige de remontoir 10, par l'intermédiaire d'une chaîne cinématique de remontage manuel 100.

Dans le mode de réalisation représenté, l'au moins une deuxième roue libre 51a, 51b forme un accouplement unidirectionnel fonctionnant avantageusement par obstacle. Autrement dit, cet accouplement unidirectionnel comprend au moins un élément susceptible d'entraîner un premier mobile en lui faisant obstacle, tel qu'un cliquet, un crochet, une lame élastique ou un pignon baladeur. Ce type d'accouplement unidirectionnel présente avantageusement une grande robustesse en supportant d'innombrables inversions de sens de rotation de la masse mobile de remontage 60, avec un faible angle mort et une faible sensibilité aux pollutions pouvant nuire à ses performances. Par contre, il peut présenter une certaine sensibilité à l'usure lors de vitesses de rotation élevées induites par un remontage manuel (en l'absence d'une première roue libre 40 comme dans ce mode de réalisation). Ceci est en particulier le cas lorsque les roues libres sont en prise directe avec la masse mobile de remontage. En alternative, le redresseur 50 peut comprendre au moins un pignon baladeur, c'est-à-dire un pignon déplaçable entre :
- une première configuration solidarisant l'entrée et la sortie du redresseur, et
- une deuxième configuration désolidarisant l'entrée de la sortie du redresseur.

Dans le mode de réalisation représenté, la première roue libre 40 fonctionne avantageusement :
- par coincement d'au moins un élément roulant 43 tel qu'une bille, un galet, un rouleau, ou
- par coincement d'au moins un élément glissant tel que notamment un galet de forme, une came. L'ensemble de ces éléments peut ou non être précontraint en position d'embrayage par un moyen de rappel élastique. À la différence du pignon baladeur ou d'une deuxième roue libre 51a, 51b, cette première roue libre 40 constitue ou fait partie d'un accouplement unidirectionnel ne comprenant pas d'élément susceptible d'osciller lors d'un débrayage. Par conséquent, ce type de roue libre n'engendre avantageusement pas ou peu de variation de couple et de bruit. Par contre, l'angle mort d'une roue libre fonctionnant par coincement est directement dépendant du coefficient de frottement intrinsèque. Par conséquent, la première roue libre 40 est plus sensible aux pollutions. Ainsi, il est préférable de ne pas utiliser une telle structure de roue libre dans le redresseur. Toutefois, cet aspect est secondaire pour le débrayage d'une chaîne de remontage, car une fois la première roue libre 40 embrayée, ledit angle mort n'influence pas ou plus les performances du remontage automatique.

Les éléments 43 de la roue libre sont des éléments bloquants. Ces éléments bloquants peuvent avantageusement être réalisés en céramique, notamment en céramique technique.

Comme vu précédemment, la chaîne cinématique de remontage automatique 200 permet un remontage d'un ressort du barillet 20 grâce à l'énergie induite par les mouvements de la masse mobile de remontage 60. Le remontage peut être bidirectionnel, c'est-à-dire qu'il est effectif quel que soit le sens de rotation de la masse mobile de remontage 60. La masse mobile de remontage 60 peut être pivotée par un roulement à billes sur le bâti du mouvement ou sur un bâti du module de remontage automatique. La chaîne cinématique de remontage automatique 200 comprend plusieurs mobiles dont, de l'amont (la masse mobile de remontage) vers l'aval (le barillet) :
- la masse mobile de remontage 60,
- le redresseur 50,
- la première roue libre 40, et
- un entraîneur de rochet 30 engrenant avec un rochet 21 lié au ressort du barillet 20.

De préférence, les différents mobiles ou éléments sont liés mécaniquement les uns aux autres par des engrènements. Les liaisons mécaniques peuvent être directes ou indirectes. Dans le cas de deux éléments liés indirectement l'un à l'autre, un ou plusieurs renvois peuvent être prévus entre les éléments. Ces renvois peuvent participer à réaliser un rapport de transmission optimisé entre les éléments.

Un ou plusieurs renvois peuvent être disposés entre :
- la masse mobile de remontage 60 et le redresseur 50, et/ou
- le redresseur 50 et la première roue libre 40, et/ou
- la première roue libre 40, et l'entraîneur 30.

Avantageusement, le redresseur 50 et la première roue libre 40 sont mécaniquement reliés directement l'un à l'autre, notamment directement reliés par un engrènement direct d'une sortie du redresseur 50, ou des sorties du redresseur 50, avec une entrée de la première roue libre 40.

Avantageusement, une entrée du redresseur 50, ou des entrées du redresseur 50, et la masse mobile de remontage 60 sont mécaniquement reliées directement l'une à l'autre, notamment directement reliées par un engrènement d'une entrée du redresseur 50, ou des entrées du redresseur 50, avec une denture 61 de la masse mobile de remontage 60**.**

De préférence :
- la masse mobile de remontage est mobile en rotation autour d'un axe A60,
- le redresseur 50 comprend deux accouplements unidirectionnels 51a, 51b chacun mobile en rotation autour d'axes A51a, A51b,
- la première roue libre 40 est mobile en rotation autour d'un axe A40,
- l'entraîneur de rochet 30 est mobile en rotation autour d'un axe A30, et
- le barillet 20, en particulier le rochet 21, est mobile en rotation autour d'un axe A20.

De préférence, les différents axes A60, A51a, A51b, A40, A30 et A20 sont parallèles entre eux.

De préférence, la masse mobile de remontage, les accouplements unidirectionnels 51a, 51b, la première roue libre 40, l'entraîneur de rochet 30, et le barillet 20 sont guidés en rotation sur le bâti du mouvement et/ou sur un bâti du module de remontage automatique.

Le rapport de transmission ou de réduction entre la masse mobile de remontage 60 et le rochet 21 est de l'ordre de 110 à 180. Autrement dit, il est nécessaire que la masse mobile de remontage 60 fasse 110 à 180 tours pour induire une rotation d'un tour du rochet 21.

De préférence, la pièce d'horlogerie 400 comprend la tige de remontoir 10 liée au rochet 21 par l'intermédiaire d'une chaîne cinématique de remontage manuel 100 afin de permettre un armage ou remontage manuel du ressort du barillet 20.

De préférence, le redresseur 50 comprend deux roues libres 51a, 51b à cliquets. Avantageusement, le redresseur 50 est en prise directe avec la masse mobile de remontage 60, en particulier avec une denture 61 prévue sur la masse mobile de remontage 60 de sorte que l'angle mort du redresseur 50 rapporté à la masse mobile de remontage 60 soit le plus faible possible, optimisant ainsi les performances du remontage automatique. En outre, dans le mode de réalisation présenté, les entrées 52a, 52b des deux deuxièmes roues libres sont avantageusement liées en rotation l'une à l'autre directement par engrenage. L'une 52a seulement des deux entrées 52a, 52b est liée directement en rotation à la masse mobile de remontage 60 par engrenage.

Alternativement, les deux sorties des deux deuxièmes roues libres peuvent être liées en rotation l'une à l'autre directement par engrenage, et les deux entrées peuvent être liées chacune directement en rotation à la masse mobile de remontage par engrenage.

Les roues libres 51a, 51b à cliquets comprennent respectivement une roue porte-cliquets 52a, 52b, un couvercle 56a, 56b, et deux cliquets 53a, 53b. Les cliquets 53a, 53b sont pivotés sur la roue porte-cliquets 52a, 52b et/ou sur le couvercle 56a, 56b. La coopération du couvercle 56a, 56b et de la roue porte-cliquets 52a, 52b permet de maintenir les cliquets 53a, 53b au sein de l'au moins une deuxième roue libre 51a, 51b. Avantageusement, les cliquets 53a, 53b sont réalisés en céramique, en particulier en céramique technique.

Les cliquets 53a, 53b sont prévus pour coopérer avec une roue dentée 54a, 54b à dents de scie solidaire d'un pignon 55a, 55b. La roue dentée 54a, 54b est susceptible de pivoter relativement à la roue porte-cliquets 52a, 52b. Les conformations asymétriques respectives des cliquets 53a, 53b et de la roue dentée 54a, 54b permettent de réaliser un accouplement unidirectionnel. Les roues dentées 54a, 54b sont par exemple réalisées en céramique, en particulier en céramique technique. Le fonctionnement de ce type de roue libre est par exemple décrit dans le document EP3285123A1.

Au sein de la chaîne cinématique de remontage automatique 200, la première roue libre 40 à coincement est avantageusement une roue libre 40 à billes disposée en prise directe avec le redresseur 50, entre ce dernier et le rochet 21. Plus particulièrement, la première roue libre 40 comprend une roue 41 qui est directement en prise avec au moins l'un des deux pignons 55a, 55b des deux deuxièmes roues libres 51a, 51b. La première roue libre 40 est en outre en prise avec l'entraîneur de rochet 30 par l'intermédiaire d'un pignon 45 de la première roue libre 40.

Au sein de la chaîne cinématique de remontage automatique 200, la première roue libre 40 ainsi disposée en prise directe avec le redresseur 50 permet de bénéficier d'un angle mort rapporté à la masse mobile de remontage 60 qui est minimisé. Ainsi, avec une telle disposition, après un remontage manuel, il faut moins de tours de masse mobile de remontage pour rattraper ledit angle mort et rendre le remontage automatique à nouveau effectif. De plus, cette disposition de première roue libre 40 permet également de réduire le couple de transmission que doit supporter ladite première roue libre par rapport à une disposition de première roue libre 40 à proximité du rochet 21, par exemple.

Dans ce mode de réalisation, à l'image d'un roulement à billes, la première roue libre 40 comprend six billes 43 guidées dans un chemin de glissement ou de roulement 44 définissant l'interface entre une roue 41 et une bague 46 solidaire du pignon 45. Outre, dans une première configuration, le blocage de la roue 41 et de la bague 46 pour les solidariser l'une à l'autre, les billes permettent également, dans une deuxième configuration, de guider en rotation de la bague 46 relativement à la roue 41 ou de prendre part à un tel guidage.

Chaque bille 43 prend place au sein d'un logement doté d'un plan incliné usiné au sein d'un séparateur 42. Le séparateur 42 peut être en plusieurs parties, en l'occurrence ici trois parties. Ledit plan incliné participe à l'accouplement unidirectionnel. En effet, dans un premier sens de rotation relatif dit d'embrayage, les billes coopèrent avec le plan incliné de façon à se coincer dans le logement et solidariser en rotation la roue 41 avec la bague 46 par l'intermédiaire des séparateurs 42. Ces derniers se resserrent alors autour de la bague 46, comme un embrayage radial ou un frein à action radiale sur la bague 46. Dans un deuxième sens de rotation relatif dit libre (deuxième sens opposé au premier sens), les billes se trouvent hors de portée des portions des plans inclinés susceptibles de coincer les billes 43, de façon à désolidariser la roue 41 de la bague 46 et permettre une rotation relative entre ces deux éléments.

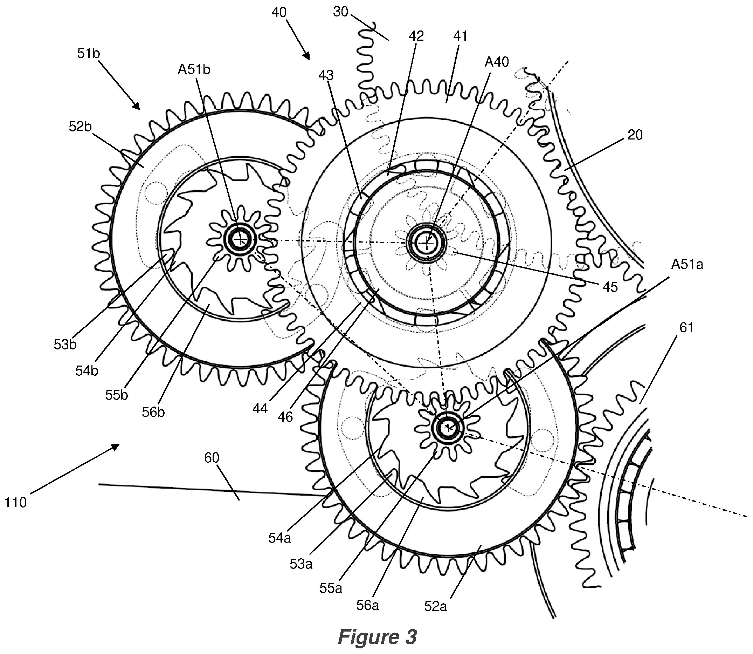

Lors d'une phase de remontage automatique, la première roue libre 40 à billes est dans une configuration embrayée, ou passe d'une configuration débrayée à une configuration embrayée. En effet, lors de cette phase, le redresseur 50 entraîne toujours la roue 41 dans le sens relatif d'embrayage, soit le sens antihoraire sur la base de la figure 3. La rotation de la roue 41 engendre l'embrayage du pignon 45 grâce au coincement des billes 43 sur les plans inclinés des logements des séparateurs 42.

La première roue libre 40 reste embrayée, quel que soit le sens de rotation de la masse mobile de remontage 60. En effet, lorsque la masse mobile de remontage 60 tourne dans le sens horaire sur la figure 3, en conséquence des engrènements :
- la roue porte-cliquets 52a engrenée directement avec la masse mobile de remontage 60 tourne dans le sens antihoraire sur la figure 3,
- la roue porte-cliquets 52b engrenée indirectement avec la masse mobile de remontage 60 tourne dans le sens horaire sur la figure 3.

Le pignon 55a associé à la roue porte-cliquets 52a engrenée directement avec la masse mobile de remontage 60 peut tourner librement en sens horaire (roue libre 51a débrayée) et le pignon 55b associé à la roue porte-cliquets 52b engrenée indirectement avec la masse mobile de remontage 60 tourne en sens horaire (roue libre 51b embrayée). Il s'ensuit que la roue 41 tourne en sens antihoraire. Les deux deuxièmes roues libres 51a, 51b sont respectivement ici débrayée et embrayée.

Lorsque la masse mobile de remontage 60 tourne dans le sens antihoraire sur la figure 3, en conséquence des engrènements :
- la roue porte-cliquets 52a engrenée directement avec la masse mobile de remontage 60 tourne dans le sens horaire sur la figure 3,
- la roue porte-cliquets 52b engrenée indirectement avec la masse mobile de remontage 60 tourne dans le sens antihoraire sur la figure 3.

Le pignon 55b associé à la roue porte-cliquets 52b engrenée indirectement avec la masse mobile de remontage 60 peut tourner librement en sens horaire (roue libre 51b débrayée) et le pignon 55a associé à la roue porte-cliquets 52a engrenée directement avec la masse mobile de remontage 60 tourne en sens horaire (roue libre embrayée). Il s'ensuit que la roue 41 tourne en sens antihoraire. Les deux deuxièmes roues libres 51a, 51b sont respectivement ici embrayée et débrayée.

Comme vu précédemment, avantageusement le redresseur comprend deux deuxièmes roues libres 51a, 51b. Ainsi, la sortie du redresseur tourne dans un même sens donné quel que soit le sens de rotation de l'entrée du redresseur.

Seul un remontage manuel permet de débrayer la première roue libre 40 par l'intermédiaire de l'entraîneur 30 et du pignon 45.

Lors d'une phase de remontage manuel, la première roue libre est débrayée et le redresseur 50 est avantageusement désolidarisé de l'entraîneur 30 par la première roue libre 40. En effet, dans cette phase, le pignon 45 et la bague 46 solidaires sont entraînés dans le sens relatif libre (sens de rotation antihoraire de rotation du pignon 45 relativement à la roue 41 sur la figure 3). La rotation de la bague 46 solidaire du pignon 45 entraîne les billes 43 hors de portée des portions des plans inclinés des logements des séparateurs 42 susceptibles de les coincer. Les billes 43 se décoincent alors et les séparateurs se desserrent de la bague 46. Durant cette phase, la première roue libre 40 se comporte ainsi comme un guidage en rotation du pignon 45 relativement à la bague 46. Autrement dit, lorsqu'elle est débrayée, le fonctionnement intrinsèque de la première roue libre 40 permet une liberté de rotation du pignon 45 sensiblement comme s'il était assemblé sur un guidage, comme un roulement, avec un couple, des frottements et des usures sensiblement négligeables, et ce, sans bruit de grattement ou d'oscillation d'éléments.

Il en résulte avantageusement une sensation et un couple de remontage à la tige de remontoir 10 équivalent à un mouvement dépourvu de système de remontage automatique, tout en préservant les deuxième roues libres 51a, 51b du redresseur 50.

Comme la première roue libre 40 est directement en prise avec le redresseur 50, le couple de remontage automatique engendré par la masse mobile de remontage 60 que ladite première roue libre doit supporter est plus faible que si cette première roue libre avait été agencée à proximité du rochet 21. Cet agencement offre donc un rapport de transmission plus favorable et permet avantageusement l'utilisation d'une première roue libre 40 à billes optimisée, avec de bien meilleures performances en termes notamment d'angle mort et de frottement intrinsèque, que celles connues de l'art antérieur utilisées pour le débrayage d'une chaîne cinématique de remontage automatique.

Lors d'un remontage manuel, il est préférable de garantir que la première roue libre 40 débraye constamment et, par conséquent, qu'il soit impossible de solliciter le redresseur 50. Pour y parvenir, il faut que le couple de débrayage de la première roue libre 40 rapporté au redresseur 50 soit plus faible que le couple de débrayage de ce dernier. Or, le faible rapport de transmission entre :
- la première roue libre 40, et
- le redresseur 50
obtenu par les solutions décrites plus haut et l'utilisation d'une première roue libre 40 permettent de garantir un couple de débrayage très faible quelle que soit la vitesse de rotation. Une roue libre fonctionnant par coincement, telle qu'une première roue libre 40 à billes offre avantageusement un couple de débrayage très faible.

L'angle mort à la première roue libre 40 n'a pas ou peu d'influence sur les performances d'un remontage manuel. L'angle mort de la première roue libre 40 est l'angle maximal que doit parcourir la roue 41 relativement à la bague 46 avant que la roue 41 et la bague 46 ne soient de nouveau solidaires l'une de l'autre.

Toutefois, si le rochet 21 est bloqué par un cliquet de rochet après un remontage manuel, un remontage automatique n'est effectif qu'une fois l'angle mort de la première roue libre 40 rattrapé. Par conséquent, les premiers mouvements de la masse mobile de remontage 60 ne serviront qu'à rattraper ledit angle mort engendrant momentanément un remontage automatique non effectif.

Le type de première roue libre 40 adopté et l'architecture proposée ici permettent de limiter cet inconvénient. En effet, le fonctionnement intrinsèque de la première roue libre 40 permet d'avoir avantageusement un angle mort très faible. De plus, étant donné que la première roue libre 40 est directement en prise avec le redresseur 50, elle se situe avantageusement là où le rapport de transmission est le plus faible avec la masse mobile de remontage 60. Par conséquent, l'angle mort de la première roue libre 40 est plus rapidement rattrapé par les mouvements de la masse mobile de remontage 60 que si la première roue libre 40 avait été placée plus près du rochet 21.

Une fois la première roue libre 40 embrayée, l'angle mort de la première roue libre 40 n'a plus aucune influence sur les performances de remontage automatique, car elle reste dès lors constamment embrayée jusqu'au prochain remontage manuel.

De préférence, un premier rapport de réduction entre :
- une sortie du redresseur 50, et
- une entrée de la première roue libre 40,
est inférieur à 8, voire inférieur à 6, voire encore inférieur à 5.

De préférence, la chaîne de remontage automatique 200 comprend une première chaîne de réduction de la masse mobile de remontage 60 à la première roue libre 40, notamment à la roue 41, ayant un deuxième rapport de réduction inférieur à 6, voire inférieur à 5, voire encore inférieur à 4.

De préférence, la chaîne de remontage automatique 200 comprend une deuxième chaîne de réduction de la première roue libre 40, notamment du pignon 45, au rochet 21 du barillet 20 ayant un troisième rapport de réduction supérieur à 20, voire supérieur à 25, voire encore supérieur à 30.

De préférence, le ratio du deuxième rapport de réduction sur le premier rapport de réduction est inférieur à 3, voire inférieur à 2, voire encore inférieur à 1.

La solution décrite met à profit un redresseur à cliquets ou à obstacles directement en prise avec une masse mobile de remontage et comprend avantageusement un roulement unidirectionnel de type roue libre à billes permettant d'optimiser les performances et les sensations de l'utilisateur lors d'un remontage manuel.

La solution proposée permet finalement de débrayer une chaîne cinématique de remontage automatique à l'aide d'une roue libre fonctionnant avantageusement par coincement, telle qu'un roulement unidirectionnel à billes. Avantageusement encore, la roue libre est agencée en prise directe avec le redresseur doté de roues libres fonctionnant par obstacle, telles que des roues libres à cliquets. Cette solution permet de bénéficier d'un couple de remontage manuel faible et constant. En effet, comme le débrayage est opéré sans composants oscillants, les problématiques de variation de couple et d'usure sont ainsi résolues. De plus, ce roulement unidirectionnel permet de bénéficier d'un faible angle mort qui peut être rattrapé par un nombre de tours de masse mobile de remontage bien moindre (de l'ordre de 5 à 8 fois moindre) que ceux des solutions connues, grâce en sus à son agencement au plus proche du redresseur.

Les liaisons, en particulier les dentures, agencées de sorte à coopérer directement avec des éléments situés en amont, dans la chaîne cinématique de remontage automatique 200 sont ou constituent des entrées et les liaisons, en particulier les dentures, agencées de sorte à coopérer directement avec des éléments situés en aval, dans la chaîne cinématique de remontage automatique 200 sont ou constituent des sorties.

Dans un montage série, l'entrée d'un élément est reliée à la sortie d'un élément précédent ou amont et la sortie de l'élément est reliée à l'entrée d'un élément suivant ou aval.

Selon un autre aspect de l'invention, des objets sont définis par les propositions qui suivent :
1. Mécanisme de transmission (110) pour dispositif de remontage automatique pour pièce d'horlogerie (400), le dispositif de remontage automatique permettant l'armage ou le remontage automatique d'un barillet (20) grâce à une transmission d'énergie des mouvements d'une masse mobile de remontage (60), le mécanisme de transmission comprenant un montage en série, de l'aval vers l'amont :
   - d'une première roue libre (40) fonctionnant par coincement dû au frottement ou à l'arc-boutement d'éléments roulants comme des billes ou des galets ou des rouleaux, ou d'éléments glissants comme des cames ou des galets de forme,
   - d'un redresseur (50) comprenant (i) au moins un accouplement unidirectionnel fonctionnant par obstacle et fonctionnant donc même en l'absence de frottement, ou (ii) au moins une deuxième roue libre (51a, 51b) fonctionnant par obstacle et fonctionnant donc même en l'absence de frottement, et
   - de la masse mobile de remontage (60).
2. Mécanisme de transmission (110) selon la proposition 1, caractérisé en ce que le redresseur (50) et la première roue libre (40) sont mécaniquement reliés directement l'un à l'autre, notamment directement reliés par un engrènement direct d'une sortie du redresseur (50) avec une entrée de la première roue libre (40).
3. Mécanisme de transmission (110) selon la proposition 1 ou 2, caractérisé en ce qu'un premier rapport de réduction entre :
   - une sortie du redresseur (50), et
   - une entrée de la première roue libre (40),
   est inférieur à 8, voire inférieur à 6, voire encore inférieur à 5.
4. Mécanisme de transmission (110) selon l'une des propositions 1 à 3, caractérisé en ce que l'au moins une deuxième roue libre (51a, 51b) est une roue libre à au moins un cliquet (53).
5. Mécanisme de transmission (110) selon la proposition 4, caractérisé en ce que l'au moins un cliquet (53a, 53b) est en céramique.
6. Mécanisme de transmission (110) selon l'une des propositions 1 à 5, caractérisé en ce que la première roue libre (40) comprend au moins un élément bloquant (43) agissant par coincement, notamment :
   - des éléments roulants comme des billes ou des galets ou des rouleaux, notamment des éléments roulants en céramique comme des billes en céramique ou des galets en céramique ou des rouleaux en céramique, ou,
   - des éléments glissants comme des galets de forme ou des cames, notamment des éléments glissants en céramique comme des galets de forme en céramique ou des cames en céramique.
7. Mécanisme de transmission (110) selon l'une des propositions 1 à 6, caractérisé en ce que le redresseur comprend deux deuxièmes roues libres (51a, 51b) de sorte qu'une sortie du redresseur tourne dans un même sens donné quel que soit le sens de rotation d'une entrée du redresseur.
8. Chaîne de remontage automatique (200) ou module de remontage automatique (250) comprenant un mécanisme de transmission (110) selon l'une des propositions 1 à 7.
9. Chaîne de remontage automatique (200) ou module de remontage automatique (250) selon la proposition 8, caractérisé(e) en ce qu'il/elle comprend une première chaîne de réduction de la masse mobile de remontage (60) à la première roue libre (40) ayant un deuxième rapport de réduction inférieur à 6, voire inférieur à 5, voire encore inférieur à 4,
   et/ou en ce qu'il/elle comprend une deuxième chaîne de réduction de la première roue libre (40) à un rochet (21) du barillet (20) ayant un troisième rapport de réduction supérieur à 20, voire supérieur à 25, voire encore supérieur à 30.
10. Chaîne de remontage automatique (200) ou module de remontage automatique (250) selon l'une des propositions 8 et 9, caractérisé(e) en ce qu'une entrée du redresseur (50) et la masse mobile de remontage (60) sont mécaniquement reliées directement l'une à l'autre, notamment directement reliées par un engrènement d'une entrée du redresseur (50) avec une denture (61) de la masse mobile de remontage (60)**.**
11. Mouvement horloger (300) comprenant un mécanisme de transmission (110) selon l'une des propositions 1 à 7 et/ou une chaîne de remontage automatique (200) selon l'une des propositions 8 à 10 et/ou un module de remontage automatique (250) selon l'une des propositions 8 à 10.
12. Mouvement horloger (300) selon la proposition 11, caractérisé en ce que le mouvement comprend une chaîne de remontage manuel (100), notamment une chaîne de remontage manuel manipulable par un utilisateur via un organe d'actionnement, notamment une tige (10).
13. Mouvement horloger (300) selon la proposition 11 ou 12, caractérisé en ce que le mouvement horloger comprend une chaîne de remontage automatique (200) agencée de sorte à être débrayée lors d'une manipulation de remontage manuel à la tige (10).
14. Pièce d'horlogerie (400) comprenant :
   - un mouvement (300) selon l'une des propositions 11 à 13, et/ou
   - une chaîne de remontage automatique (200) selon l'une des propositions 8 à 10, et/ou
   - un module de remontage automatique (250) selon l'une des propositions 8 à 10, et/ou
   - un mécanisme de transmission (110) selon l'une des propositions 1 à 7.

## Revendications

1. Mécanisme de transmission (110) pour dispositif de remontage automatique pour pièce d'horlogerie (400), le dispositif de remontage automatique permettant l'armage ou le remontage automatique d'un barillet (20) grâce à une transmission d'énergie des mouvements d'une masse mobile de remontage (60), le mécanisme de transmission comprenant un montage en série, de l'aval vers l'amont :
- d'une première roue libre (40) fonctionnant par coincement dû au frottement ou à l'arc-boutement d'éléments roulants comme des billes ou des galets ou des rouleaux, ou d'éléments glissants comme des cames ou des galets de forme,
- d'un redresseur (50) comprenant (i) au moins un accouplement unidirectionnel fonctionnant par obstacle et fonctionnant donc même en l'absence de frottement, ou (ii) au moins une deuxième roue libre (51a, 51b) fonctionnant par obstacle et fonctionnant donc même en l'absence de frottement, et
- de la masse mobile de remontage (60),
un premier rapport de réduction entre :
- une sortie du redresseur (50), et
- une entrée de la première roue libre (40),
étant inférieur à 8, voire inférieur à 6, voire encore inférieur à 5.

2. Mécanisme de transmission (110) selon la revendication 1, **caractérisé en ce que** le redresseur (50) et la première roue libre (40) sont mécaniquement reliés directement l'un à l'autre, notamment directement reliés par un engrènement direct d'une sortie du redresseur (50) avec une entrée de la première roue libre (40).

3. Mécanisme de transmission (110) selon l'une des revendications précédentes, **caractérisé en ce que** l'au moins une deuxième roue libre (51a, 51b) est une roue libre à au moins un cliquet (53).

4. Mécanisme de transmission (110) selon la revendication précédente, **caractérisé en ce que** l'au moins un cliquet (53a, 53b) est en céramique.

5. Mécanisme de transmission (110) selon l'une des revendications précédentes, **caractérisé en ce que** la première roue libre (40) comprend au moins un élément bloquant (43) agissant par coincement, notamment :
- des éléments roulants comme des billes ou des galets ou des rouleaux, notamment des éléments roulants en céramique comme des billes en céramique ou des galets en céramique ou des rouleaux en céramique, ou,
- des éléments glissants comme des galets de forme ou des cames, notamment des éléments glissants en céramique comme des galets de forme en céramique ou des cames en céramique.

6. Mécanisme de transmission (110) selon l'une des revendications précédentes, **caractérisé en ce que** le redresseur comprend deux deuxièmes roues libres (51a, 51b) de sorte qu'une sortie du redresseur tourne dans un même sens donné quel que soit le sens de rotation d'une entrée du redresseur.

7. Chaîne de remontage automatique (200) ou module de remontage automatique (250) comprenant un mécanisme de transmission (110) selon l'une des revendications précédentes.

8. Chaîne de remontage automatique (200) ou module de remontage automatique (250) selon la revendication précédente, caractérisé(e) en ce qu'il/elle comprend une première chaîne de réduction de la masse mobile de remontage (60) à la première roue libre (40) ayant un deuxième rapport de réduction inférieur à 6, voire inférieur à 5, voire encore inférieur à 4,
et/ou en ce qu'il/elle comprend une deuxième chaîne de réduction de la première roue libre (40) à un rochet (21) du barillet (20) ayant un troisième rapport de réduction supérieur à 20, voire supérieur à 25, voire encore supérieur à 30.

9. Chaîne de remontage automatique (200) ou module de remontage automatique (250) selon l'une des revendications 7 et 8, caractérisé(e) en ce qu'une entrée du redresseur (50) et la masse mobile de remontage (60) sont mécaniquement reliées directement l'une à l'autre, notamment directement reliées par un engrènement d'une entrée du redresseur (50) avec une denture (61) de la masse mobile de remontage (60)**.**

10. Mouvement horloger (300) comprenant un mécanisme de transmission (110) selon l'une des revendications 1 à 6 et/ou une chaîne de remontage automatique (200) selon l'une des revendications 7 à 9 et/ou un module de remontage automatique (250) selon l'une des revendications 7 à 9.

11. Mouvement horloger (300) selon la revendication précédente, **caractérisé en ce que** le mouvement comprend une chaîne de remontage manuel (100), notamment une chaîne de remontage manuel manipulable par un utilisateur via un organe d'actionnement, notamment une tige (10).

12. Mouvement horloger (300) selon la revendication 10 ou 11, **caractérisé en ce que** le mouvement horloger comprend une chaîne de remontage automatique (200) agencée de sorte à être débrayée lors d'une manipulation de remontage manuel à la tige (10).

13. Pièce d'horlogerie (400) comprenant :
- un mouvement (300) selon l'une des revendications 10 à 12, et/ou
- une chaîne de remontage automatique (200) selon l'une des revendications 7 à 9, et/ou
- un module de remontage automatique (250) selon l'une des revendications 7 à 9, et/ou
- un mécanisme de transmission (110) selon l'une des revendications 1 à 6.
